(19) **Europäisches Patentamt**
**European Patent Office**
**Office européen des brevets**

(11) **EP 2 379 355 B1**

(12) **EUROPEAN PATENT SPECIFICATION**

(45) Date of publication and mention
of the grant of the patent:
**13.03.2013 Bulletin 2013/11**

(51) Int Cl.:
***B60C 15/06*** (2006.01)

(21) Application number: **09775232.3**

(86) International application number:
**PCT/EP2009/067693**

(22) Date of filing: **21.12.2009**

(87) International publication number:
**WO 2010/072736 (01.07.2010 Gazette 2010/26)**

(54) **TYRE WITH IMPROVED BEADS**

REIFEN MIT VERBESSERTEN WÜLSTEN

PNEU À TALONS AMÉLIORÉS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **22.12.2008 FR 0858897
30.04.2009 US 174277 P**

(43) Date of publication of application:
**26.10.2011 Bulletin 2011/43**

(73) Proprietors:
• **COMPAGNIE GENERALE DES
ETABLISSEMENTS MICHELIN
63000 Clermont-Ferrand (FR)**
• **MICHELIN Recherche et Technique S.A.
1763 Granges-Paccot (CH)**

(72) Inventor: **DAVAL, Bertrand
F-63100 Clermont-ferrand (FR)**

(74) Representative: **Randl, Oliver Georg
M.F.P. MICHELIN
23, place des Carmes-Déchaux
SGD/LG/PI-F35-Ladoux
63040 Clermont-Ferrand Cedex 9 (FR)**

(56) References cited:
**EP-A- 0 924 108    EP-A- 0 947 358**

Printed by Jouve, 75001 PARIS (FR)

**Description**

FIELD OF THE INVENTION

This invention relates to tyres for passenger vehicles, and especially to the beads of these tyres.

BACKGROUND

Tyres for passenger vehicles usually comprise:

two beads designed to be in contact with a wheel rim, each bead comprising at least one annular reinforcing structure and a bead filler, the bead filler being located radially outside of the annular reinforcing structure;

two sidewalls extending the beads radially toward the outside, the two sidewalls joining in

a crown comprising a crown reinforcement surmounted by a tread;

at least one carcass reinforcement extending from the beads through the sidewalls to the crown, and comprising a plurality of carcass reinforcing elements. Very often the carcass reinforcement is anchored in the two beads by a turn-up around the annular reinforcing structure in such a way as to form in each bead an "incoming portion" and a "wrapped-around portion". The bead filler is located at least partially between the incoming portion and the wrapped-around portion of the carcass reinforcement.

Document US 5 526 863 teaches the provision of a special bead, with the object of reducing the mass of the bead and improving the rolling resistance of such a tyre. The tyre disclosed in that document comprises a bead filler comprising:

a first part of tapered radial section, this first part becoming progressively thinner radially toward the outside before turning into

a second part with a radial section that has an approximately constant width, the second part being located radially outside of the first part and turning into

a third part with a radial section that tapers off, the third part being situated radially outside of the second part.

The bead filler extends radially outside of the radially innermost point of the annular reinforcing structure of the bead, as far as a radial distance from the said point that is greater than or equal to 30% of the radial height H of the tyre.
Each bead also comprises an outer band placed axially outside of both the carcass reinforcement and the bead filler. This outer band extends radially toward the outside, from a radially inner end located at a distance less than or equal to 20% of the radial height H of the tyre from the radially innermost point of the annular reinforcing structure of the bead, as far as a radially outer end, and the radial distance from the radially outer end of the outer band to the radially inner end of the outer band being greater than or equal to 40% of the radial height H of the tyre.
Since that patent, the oil price rise and the awakening of consumers' ecological consciences have further increased the need to reduce tyre rolling resistance, as the latter has a direct impact on fuel consumption. Thus, the reduction of rolling resistance obtained with a tyre according to document US 5 526 863 is no longer sufficient.
EP-A-0 947 358 shows a tire disclosing all the features of the preamble of claim 1.

SUMMARY OF THE INVENTION

One of the objects of the present invention is to provide a passenger vehicle tyre having a very low rolling resistance.
This object is achieved with a tyre comprising:

two beads designed to be in contact with a wheel rim, each bead comprising at least one annular reinforcing structure;

two sidewalls extending the beads radially toward the outside, the two sidewalls joining in

a crown comprising a crown reinforcement surmounted by a tread;

at least one carcass reinforcement extending from the beads through the sidewalls to the crown, the carcass reinforcement comprising a plurality of carcass reinforcing elements and being anchored in the two beads by a turn-up around the annular reinforcing structure in such a way as to form in each bead an incoming portion and a wrapped-around portion, each wrapped-around portion extending radially toward the outside, to an end located at a radial distance DRR from the radially innermost point of the annular reinforcing structure of the bead, and the radial distance DRR being greater than or equal to 15% of the radial height H of the tyre.

Each bead has a bead filler, the bead filler being located radially outside of the annular reinforcing structure and at least partly between the incoming portion and the wrapped-around portion of the carcass reinforcement. The bead filler extends radially outside of the radially innermost point of the annular reinforcing structure of the bead, as far as a radial distance DRB from said point, the radial distance DRB being greater than or equal to 20% of the radial height H of the tyre.

Each bead also comprises an outer band placed axially outside of both the carcass reinforcement and the bead filler, each outer band extending radially toward the outside, from a radially inner end located at a distance DRI from the radially innermost point of the annular reinforcing structure of the bead, DRI being less than or equal to 20% of the radial height H of the tyre, as far as a radially outer end situated radially outside of the radially innermost point of the annular reinforcing structure of the bead, the radial distance DRL from the radially outer end of the outer band to the radially inner end of the outer band being greater than or equal to 25% (and preferably greater than or equal to 30%) of the radial height H of the tyre.

The outer band of a tyre according to an embodiment of the invention is made of a rubber compound having an elastic modulus G' less than or equal to 15 MPa and a viscous modulus G" such that:

$$G'' \text{ [MPa]} \leq 0.2 G' \text{ [MPa]} - 0.2 \text{ MPa,}$$

the elastic and viscous moduli being measured at 23°C.

Such rubber compounds have never, to the applicant's knowledge, been used for the bead and the lower part of the sidewalls of a tyre. In fact the outer bands of most existing tyres have moduli ten or even twenty times greater than the moduli of a tyre according to this embodiment of the invention.

The applicant has discovered that the use of such materials which are stiff but have very little hysteresis represents a very promising compromise. They give a firm bead but very significantly reduce the rolling resistance of the tyre.

The bead filler and the outer band are preferably made of a rubber compound having an elastic modulus G' less than or equal to 15 MPa and a viscous modulus G" such that:

$$G'' \text{ [MPa]} \leq 0.2 G' \text{ [MPa]} - 0.2 \text{ MPa,}$$

the elastic and viscous moduli being measured at 23°C.

It is possible to further reduce the rolling resistance by optimizing the geometry of the portion or portions of the tyre having these moduli. In one advantageous embodiment, the portion of rubber compound having an elastic modulus G' less than or equal to 15 MPa and a viscous modulus G" such that:

$$G'' \text{ [MPa]} \leq 0.2 G' \text{ [MPa]} - 0.2 \text{ MPa}$$

has, in any radial section, a thickness E(r), this thickness corresponding to the length of the intersection of the direction perpendicular to the incoming portion of the carcass reinforcement with said portion of rubber compound, r being the distance from the intersection of said direction perpendicular to the incoming portion of the carcass reinforcement with the carcass reinforcement to the radially innermost point of the annular reinforcing structure. The thickness E(r) changes as a function of the distance r such that, in the range of distances r greater than or equal to 15 % and smaller than or equal to 50 % of the radial height H of the tyre (or alternatively in the range of distances r greater than or equal to 20 mm and smaller than or equal to 50 mm), the variation of the thickness $\dfrac{\partial E(r)}{\partial r}$ is less than or equal to -0.25 mm/mm (and preferably less than or equal to -0.3 mm/mm) over at least 5 mm.

In another advantageous embodiment, the aspect ratio Emax/DRL, where Emax is the maximum width of the outer band measured at right angles to the incoming portion of the carcass reinforcement and where DRL is the radial height of the outer band, is greater than or equal to 10%.

In one advantageous embodiment, the bead filler comprises:

a first part of tapered radial section, this first part becoming progressively thinner radially toward the outside before turning into

a second part with a radial section that has an approximately constant width, the second part being located radially outside of the first part and turning into

a third part with a radial section that tapers off, the third part being situated radially outside of the second part.

BRIEF DESCRIPTION OF THE DRAWINGS

Figure 1 shows a tyre according to the prior art.

Figure 2 is a partial perspective view of a tyre according to the prior art.

Figure 3 is a radial section through a quarter of a tyre according to the prior art.

Figure 4 shows how the height H of a tyre is determined.

Figure 5 shows a detail of Figure 3.

Figures 6 to 8 are radial sections through a portion of a tyre according to an embodiment of the invention.

Figures 9 and 10 show how the thickness of the portion of compound according to the invention is determined.

Figures 11 and 12 show how the thickness of the portion of compound according to an embodiment of the invention changes as a function of the distance, and its variation.

Figure 13 shows the results obtained with tyres according to the invention.

DETAILED DESCRIPTION OF THE DRAWINGS

When the term "radial" is used, it is important to distinguish between several different uses of the word among those skilled in the art. Firstly, the expression refers to a radius of the tyre. It is in this sense that a point P1 is said to be "radially inside" of a point P2 if it is nearer than point P2 to the axis of rotation of the tyre. Conversely, a point P3 is said to be "radially outside" of a point P4 if it is further than point P4 from the axis of rotation of the tyre. When radial distances are being discussed, this meaning of the term also applies. "Radially toward the inside" means toward smaller radii; "radially toward the outside" means toward greater radii.

However, a thread or reinforcement is said to be "radial" when the thread or reinforcing elements of the reinforcement form with the circumferential direction an angle greater than or equal to 80° and less than or equal to 90°. It should be noted that in this document the term "thread" is to be interpreted in the broadest sense and comprises threads in the form of monofilaments, multifilaments, a cable, a yarn or an equivalent assembly, and this irrespective of the material of the thread or the coating applied to it in order to enhance its bonding with the rubber.

Lastly, "radial section" here means a section taken along a plane containing the axis of rotation of the tyre.

An "axial" direction is a direction parallel to the axis of rotation of the tyre. A point P5 is said to be "axially inside" of a point P6 if it is closer than point P6 to the mid plane of the tyre. Conversely, a point P7 is said to be "axially outside" of a point P8 if it is further than point P8 from the mid plane of the tyre. The "mid plane" of the tyre is that plane which is perpendicular to the axis of rotation of the tyre and is equidistant from the annular reinforcing structures of each bead.

A "circumferential" direction is a direction that is perpendicular both to a radius of the tyre and to the axial direction.

A "hooping reinforcement" or "hooping layer", also known as a "bracing layer", is a layer comprising circumferentially aligned reinforcing threads (similar to hoops) which hinder the crown reinforcement from expanding when the tire is rolling at high speed.

For the purposes of this document, the expression "rubber compound" means a rubber composition comprising at least one elastomer and at least one filler.

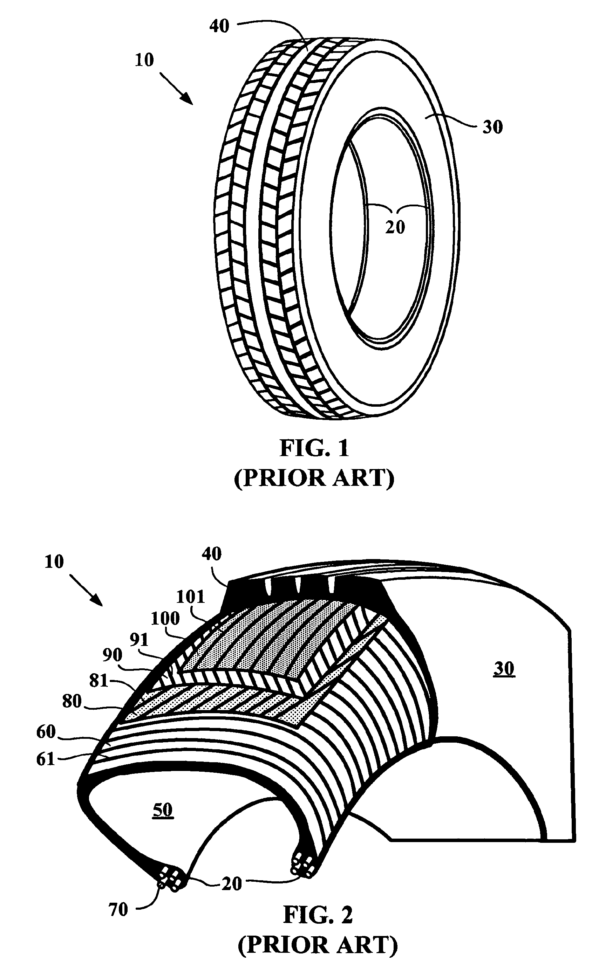

Figure 1 is a diagram of a tyre 10 according to the prior art. The tyre 10 has a crown comprising a crown reinforcement (not visible in Figure 1) surmounted by a tread 40; two sidewalls 30 extending from the crown radially toward the inside; and two beads 20 located radially inside of the sidewalls 30.

Figure 2 shows diagrammatically a partial perspective view of a tyre 10 according to the prior art and shows the various components of the tyre. The tyre 10 comprises a carcass reinforcement 60 consisting of threads 61 coated in rubber compound, and two beads 20, each comprising annular reinforcing structures 70 that keep the tyre 10 on the wheel rim (not shown). The carcass reinforcement 60 is anchored to each of the beads 20. The tyre 10 also has a crown reinforcement comprising two plies 80 and 90. Each ply 80, 90 is reinforced with filamentary reinforcing elements 81 and 91 that are parallel in each layer and crossed from one layer to the other, making with the circumferential direction angles of between 10° and 70°. The tyre also contains a hooping reinforcement 100 which is laid radially outside of the crown reinforcement. This hooping reinforcement is made up of reinforcing elements 101 oriented circumferentially and wound in a spiral. A tread 40 is laid on the hoop reinforcement; it is this tread 40 which provides the contact between the tyre 10 and the road. The tyre 10 illustrated is a "tubeless" tyre: it comprises an inner liner 50 made of a rubber composition impermeable to the inflation gases and covering the inside surface of the tyre.

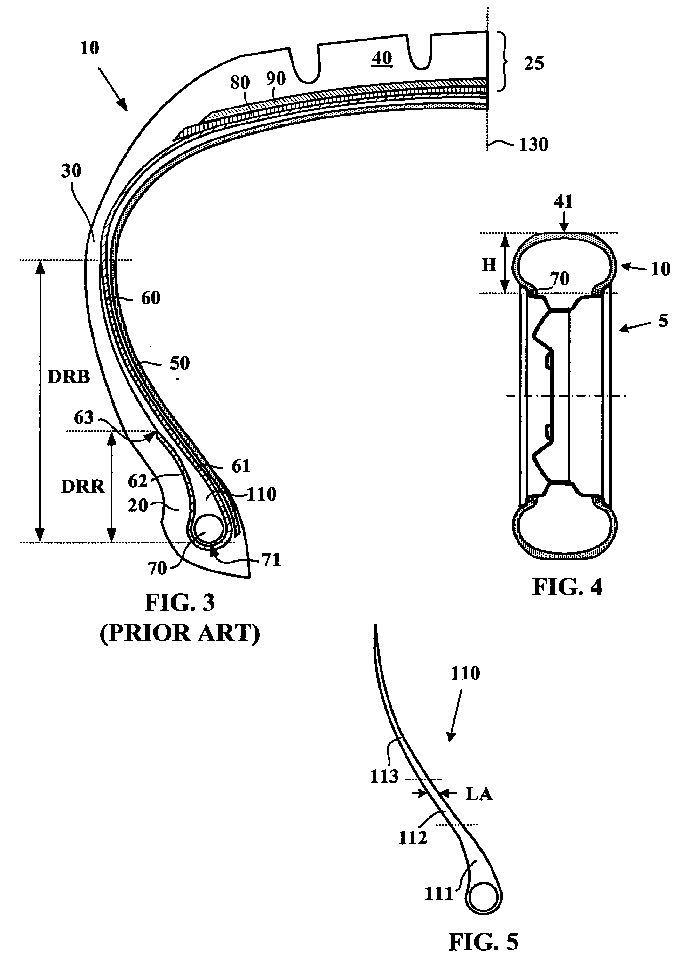

Figure 3 shows diagrammatically, in radial section, a quarter of a tyre 10 according to the prior art. The tyre 10 has two beads 20 designed to be in contact with a wheel rim (not shown), each bead 20 comprising at least one annular reinforcing structure, in this case a bead wire 70. Two sidewalls 30 extend the beads 20 radially toward the outside and join in a crown 25 comprising a crown reinforcement made up of a first layer of reinforcements 80 and a second layer of reinforcements 90, with a tread 40 surmounting them radially. Each layer of reinforcements comprises filamentary reinforcements coated in a matrix of rubber compound. The reinforcements in each layer of reinforcements are approximately parallel to each other, while the reinforcements of the two layers are crossed from one layer to the other at an angle of approximately 20°, as is well known to those skilled in the art of so-called radial tyres.

The tyre 10 also has a carcass reinforcement 60 that extends from the beads 20 along the sidewalls 30 to the crown 25. This carcass reinforcement 60 here comprises filamentary reinforcements oriented approximately radially, meaning that they form with the circumferential direction an angle greater than or equal to 80° and less than or equal to 90°.

The carcass reinforcement 60 comprises a plurality of carcass reinforcing elements anchored in the two beads 20 by a turn-up around the bead wire 70, in such a way as to form in each bead an incoming portion 61 and a wrapped-around portion 62. The boundary between the incoming portion 61 and the wrapped around portion 62 is considered to lie at the intersection of the carcass reinforcement 60 with a plane perpendicular to the axis of rotation of the tyre and containing the radially innermost point of the carcass reinforcement 60 in the bead. The wrapped-around portion extends radially toward the outside, to an end 63 which lies at a radial distance DRR from the radially innermost point 71 of the annular reinforcing structure of the bead, the radial distance DRR being greater than or equal to 15% of the radial height H of the tyre.

The "radial height" H of a tyre is defined as the radial distance from the radially innermost point 71 of the annular reinforcing structure 70 of the bead 20 to the radially outermost point 41 (Figure 4) of the tread 40 when the tyre 10 is mounted on a wheel rim 5 (as depicted in Figure 4) and inflated to its service pressure.

Each bead comprises a bead filler 110, the bead filler being situated radially on the outside of the bead wire 70, a large part of it being situated between the incoming portion 61 and the wrapped-around portion 62 of the carcass reinforcement 60.

Figure 5 shows the bead filler of the tyre seen in Figure 3. The bead filler comprises a first part 111 of tapered radial section. This first part 111 becomes progressively thinner radially toward the outside before turning into a second part 112 where its radial section has an approximately constant axial width LA, in the sense that it varies by less than 5% along the length of the second part 112. The second part is located radially outside of the first part 111 and turns into a third part 113 with a radial section that tapers off, this third part being situated radially outside of the second part 112.

The bead filler 110 extends radially outside the radially innermost point 71 of the annular reinforcing structure of the bead, as far as a radial distance DRB from said radially innermost point, the radial distance DRB being greater than or equal to 20% of the radial height H of the tyre. In the present case the bead filler 110 extends all the way to the equator of the tyre. For the purposes of the present document, the "equator" of the tyre is the radial height of the point of greatest axial extension of the carcass reinforcement. In a radial section through the tyre, the equator appears as the straight axial line passing through the points where the carcass reinforcement has its greatest axial width when the tyre is fitted on the wheel rim and inflated. When the carcass reinforcement reaches this greatest axial width at several points, the radial height of the closest point to the mid-height H/2 of the tyre is taken to be the equator of the tire. The equator thus defined must not be confused with the mid plane 130 of the tyre, which is also sometimes called the "equator" in prior art documents. DRB is preferably chosen such that the bead filler does not extend radially outside of the equator of the tire.

The inside surface of the tyre 10 is covered with an inner liner 50.

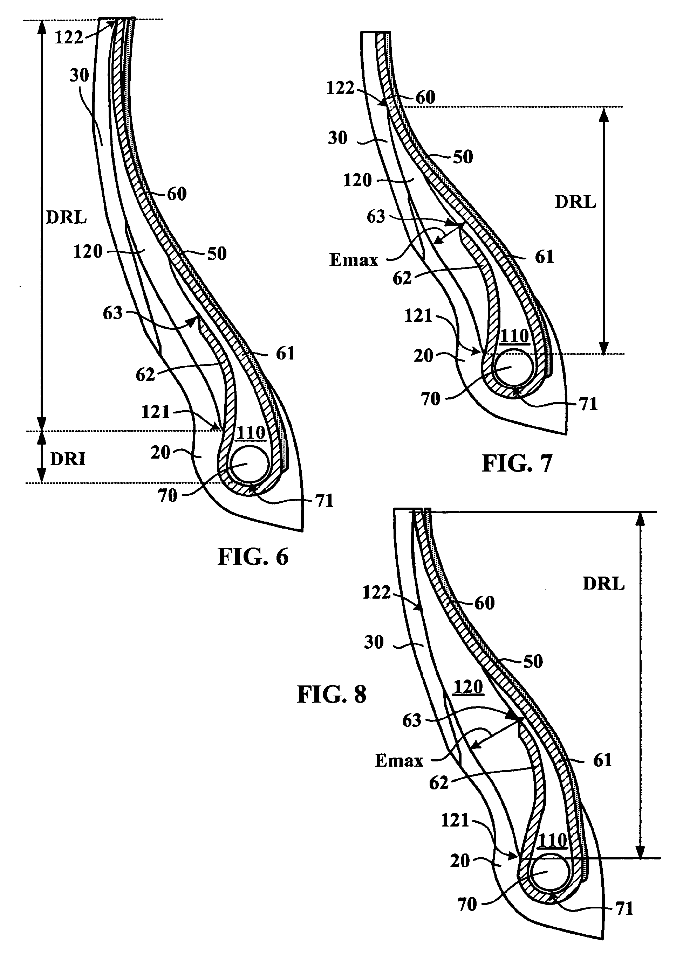

It is also known practice to provide an outer band 120 placed axially outside of both the carcass reinforcement and the bead filler, as in the tyre shown in Figure 6. Each outer band extends radially toward the outside from a radially inner end 121 situated at a radial distance DRI from the radially innermost point 71 of the annular reinforcing structure 70 of the bead, DRI being less than or equal to 20% of the radial height H of the tyre, as far as a radially outer end 122, the radial distance DRL between the radially outer end 122 of the outer band and the radially inner end 121 of the outer band being greater than or equal to 25% (and preferably greater than or equal to 30%) of the radial height H of the tyre.

The bead filler 110 and the outer band 120 are typically made from rubber compounds having an elastic modulus G' greater than or equal to 40 MPa and a viscous modulus G" of between 9 and 10 MPa.

In the present document, the terms "elastic modulus G' " and "viscous modulus G" " denote dynamic properties familiar to those skilled in the art. These properties are measured on a Metravib VA4000 type viscoanalyser on test pieces moulded from uncured compounds or on glued test pieces made from cured compounds. Test pieces such as those described in standard ASTM D 5992 - 96 (version published September 2006, initially approved in 1996) in Figure X2.1 (circular embodiment) are used. The diameter "d" of the test piece is 10 mm (it therefore has a circular section of 78.5 mm$^2$), the thickness "L" of each of the portions of rubber compound is 2 mm, which gives a ratio "d/L" of 5 (in contrast to standard ISO 2856, mentioned in the ASTM standard, paragraph X2.4, which recommends a value d/L of 2).

The response of a test piece of vulcanized rubber compound subjected to a sinusoidal stress in alternating simple shear, at a frequency of 10 Hz and at a stabilized temperature of 23°C is recorded. The test piece is stressed symmetrically about its equilibrium position. All amplitudes of deformation are scanned, from 0.1% to 50% (on the outward cycle), then from 50% to 0.1% (on the return cycle). The result which is used is the elastic dynamic shear modulus (G') and the viscous shear modulus (G") at 10% of deformation on the return cycle.

It is an object of the present invention to provide a tyre for a passenger vehicle having less rolling resistance than prior art tyres, such as the tyre shown in Figure 3.

This object is achieved with a tyre comprising an outer band made of a rubber compound having an elastic modulus G' less than or equal to 15 MPa and a viscous modulus G" such that:

$$G'' \text{ [MPa]} \leq 0.2G' \text{ [MPa]} - 0.2 \text{ MPa.}$$

To the best of the applicant's knowledge, such rubber compounds have never been used for the bead or the lower part of the sidewalls.

Table I gives, as an example, the composition of a rubber compound for a previously known outer band (the "standard compound") and of rubber compounds that can be used to form an outer band according to an embodiment of the invention ("compound according to the invention"). The composition is given in phr ("parts per hundred of rubber"), that is to say, parts by weight per 100 parts by weight of rubber. The corresponding dynamic moduli are also indicated.

Table I

| Parts [phr] | Standard compound | Compound according to the invention | Compound according to the invention |
|---|---|---|---|
| | 1 | 2 | 3 |
| NR [1] | 100 | 100 | 100 |
| N 330 | 75 | | |
| N 990 | | 85 | 85 |
| Graphite | | 40 | |
| Paraffin oil | 3 | | |
| Antioxidant (6PPD) [2] | 2 | 2 | 2 |
| Cobalt Naphthenate | 3 | 3 | 3 |
| Stearic acid | 1 | 1 | 1 |
| ZnO | 7 | 7 | 7 |
| Phenol-formaldehyde resin | 12 | | |
| Hardener | 3 | | |
| Sulphur | 7 | 7 | 7 |
| Accelerator (TBBS) [3] | 1 | 1 | 1 |
| G' | 40 | 5 | 2 |
| G" | 9 | 0.8 | 0.2 |

Notes to Table I:
[1] Natural rubber
[2] N-(1,3-dimethylbutyl)-N'-phenyl-p-phenylenediamine
[3] N-tert-butyl-2-benzothiazyle sulphonamide

The rubber compound is preferably based on at least one diene elastomer, a reinforcing filler and a crosslinking system.

The expression "diene" elastomer (or rubber) is understood to mean, in a known manner, an elastomer derived at least partly (i.e. a homopolymer or a copolymer) from diene monomers, that is to say from monomers bearing two conjugated or unconjugated carbon-carbon double bonds. The diene elastomer used is preferably chosen from the group composed of polybutadienes (BR), natural rubber (NR), synthetic polyisoprenes (IR), butadiene-styrene copolymers (SBR), isoprene-butadiene copolymers (BIR), isoprene-styrene copolymers (SIR), butadiene-styrene-isoprene copolymers (SBIR) and blends of these elastomers.

One preferred embodiment uses an "isoprene" elastomer, that is to say an isoprene homopolymer or copolymer, in other words a diene elastomer chosen from the group composed of natural rubber (NR), synthetic polyisoprenes (IR), the various isoprene copolymers and blends of these elastomers.

The isoprene elastomer is preferably natural rubber or a synthetic polyisoprene of the cis-1,4 type. Among these synthetic polyisoprenes, use is preferably made of polyisoprenes having a (mol %) content of cis-1,4 bonds greater than 90%, more preferably still greater than 98%. According to other preferred embodiments, the diene elastomer may be composed, completely or partly, of one other diene elastomer such as, for example, an SBR (E-SBR or S-SBR) elastomer used as a blend or not with another elastomer, for example of BR type.

The rubber composition may also comprise all or some of the additives customarily used in rubber matrices intended for manufacturing tyres, such as for example reinforcing fillers such as carbon black or inorganic fillers such as silica, coupling agents for inorganic fillers, anti-aging agents, antioxidants, plasticizers or extending oils, the latter being of aromatic or non-aromatic nature (in particular oils that are very slightly aromatic or are non-aromatic, for example of the naphthenic or paraffin type, having a high or preferably low viscosity, MES or TDAE oils, plasticizing resins having a high $T_g$ above 30°C), agents that facilitate the processing (processability) of compositions in the uncured state, tackifying resins, a crosslinking system based either on sulphur or on sulphur donors, and/or on peroxide, accelerators, vulcanization activators or retarders, antireversion agents, methylene acceptors and donors such as for example HMT (hexamethylene tetramine) or H3M (hexamethoxymethylmelamine), reinforcing resins (such as resorcinol or bimaleimide), known adhesion-promoting systems of the metal salt type for example, in particular cobalt or nickel salts.

The compositions are manufactured in suitable mixers, using two successive preparation stages well known to a person skilled in the art: a first thermo-mechanical working or kneading stage (known as "non-productive" stage) at high temperature, up to a maximum temperature between 110°C and 190°C, preferably between 130°C and 180°C, followed by a second mechanical working stage (known as a "productive" stage) at a lower temperature, typically below 110°C, during which finishing stage the crosslinking system is incorporated.

By way of example, the non-productive stage is carried out in a single thermomechanical step of a few minutes (for example, between 2 and 10 min) during which all the base constituents required and other additives, apart from the crosslinking or vulcanization system, are introduced into a suitable mixer such as a standard internal mixer. After cooling of the mixture thus obtained, the vulcanization system is then incorporated in an external mixer such as an open mill, kept at low temperature (for example between 30°C and 100°C). All the ingredients are then mixed (productive stage) for a few minutes (for example between 5 and 15 min).

The final composition thus obtained is then calendered, for example in the form of a film or sheet for characterization, or else extruded, in order to form the outer band used in a tyre according to the invention.

Vulcanization (or curing) can then be conducted in a known manner at a temperature of generally between 130°C and 200°C, preferably under pressure, for a sufficient period which may vary for example between 5 and 90 min depending particularly on the curing temperature, the vulcanization system used and the vulcanization kinetics of the composition in question.

If the "standard compound" that forms the outer band 120 in the tyre shown in Figure 6 is replaced with a compound having an elastic modulus G' less than or equal to 15 MPa and a viscous modulus G" such that:

$$\text{G" [MPa]} \leq 0.2\text{G' [MPa]} - 0.2 \text{ MPa}$$

rolling resistance is significantly reduced.

This reduction can be further increased if the outer band 120 and the bead filler 110 are made from a compound having an elastic modulus G' less than or equal to 15 MPa and a viscous modulus G" such that:

$$\text{G" [MPa]} \leq 0.2\text{G' [MPa]} - 0.2 \text{ MPa.}$$

The formulation of the rubber compound forming the bead filler may be identical to that of the rubber compound forming the outer band, with the exception of the addition of cobalt salts to promote adhesion between the bead filler and the bead wire, as is well known to those skilled in the art.

Figures 7 and 8 each show a preferred embodiment of a tyre according to the invention in which the outer band 120 is more "chunky", that is to say shorter and wider. The use of this type of outer band further reduces the rolling resistance of the tyre.

These preferred embodiments can be characterized in a number of different ways. One way is to consider the thickness E(r), in any radial section, of the portion of rubber compound having an elastic modulus G' less than or equal to 15 MPa and a viscous modulus G" such that:

$$G" \text{ [MPa]} \le 0.2G' \text{ [MPa]} - 0.2 \text{ MPa.}$$

This portion may correspond to the outer band 120 only (if the rubber compound forming the bead filler 110 does not meet the conditions for G" and G') or to the assembly formed by the outer band 120 and the bead filler 110 (if the rubber compounds used to form the outer band 120 and the bead filler 110 both meet the conditions).

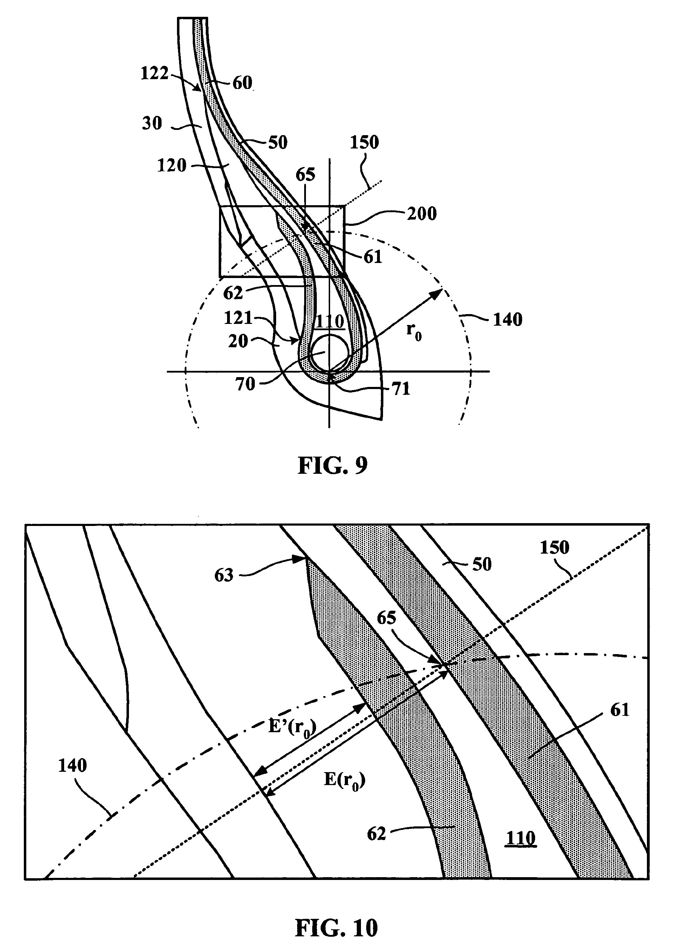

Figures 9 and 10 illustrate how the thickness E(r) is measured, with Figure 10 being an enlargement of the region contained in the box marked 200 in Figure 9. Consider the interface between the incoming portion 61 of the carcass reinforcement 60 and the bead filler 110. Each point on this interface is at a distance r from the radially innermost point 71 of the annular reinforcing structure 70. If there are several radially innermost points on the annular reinforcing structure, any of these points may be selected as a reference. For a given distance $r_0$, the corresponding point 65 on the interface is found by tracing a circle 140 of radius $r_0$ around the radially innermost point 71 of the annular reinforcing structure 70, as shown in Figure 9. The direction 150 perpendicular to the incoming portion 61 of the carcass reinforcement 60 which passes through the point 65 of the interface is then traced. The thickness $E(r_0)$ of the portion of rubber compound that meets the abovementioned condition corresponds to the length of the intersection of the direction 150 with said portion. The thickness of the wrapped-around portion 62 is ignored if the direction 150 has an intersection with it. If the outer band 120 and the bead filler 110 are formed of compound that meets the abovementioned condition, the width E $(r_0)$ is obtained; if only the outer band is formed of this type of compound, the width $E'(r_0)$ is obtained.

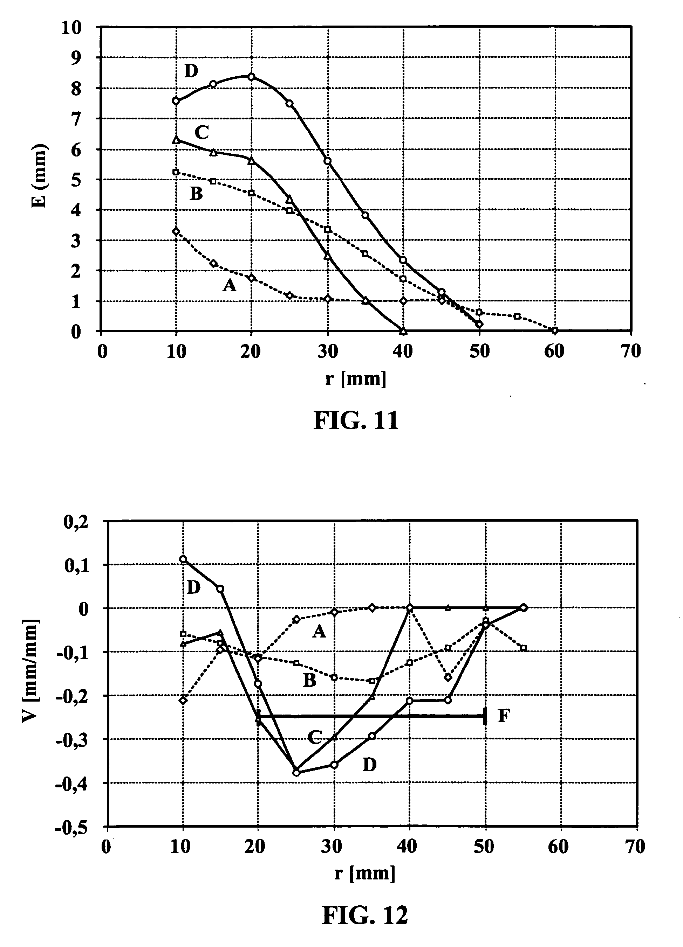

Figure 11 shows how the thickness E changes as a function of the distance r for four tyre geometries. Geometry "A" (dashes; symbol: lozenge) corresponds to a tyre according to the prior art, such as that illustrated in Figure 3. This particular tyre has been treated as if the bead filler were formed of rubber compound that meets the abovementioned condition for G' and G" (which is not actually the case) simply to enable the thicknesses to be compared. Geometries "B" (dashes; symbol: square), "C" (solid line; symbol: triangle) and "D" (solid line; symbol: circle) correspond to the tyres shown in Figures 6 to 8 respectively. We will consider the case in which the bead filler and the outer band are formed of rubber compound that meets the abovementioned condition for G' and G". In the range of radii from 20 to 50 mm, it will be seen that there is a region where the variation of the thickness is greater for variants "C" and "D". (In the example under consideration, H is equal to 112 mm, which means that the range of distances r from 20 to 50 mm corresponds to values ranging from 17.9 % of the radial height H to 44.6 % of the radial height H.)

This observation can be quantified if we consider the variation V (which is simply the function $\frac{\partial E(r)}{\partial r}$) as a function of the radius r, as shown in Figure 12. For variants "C" and "D", the thickness E(r) changes as a function of r is such that, in the range of distances r from 20 to 50 mm (indicated by reference F), the variation of the thickness $\frac{\partial E(r)}{\partial r}$ is less than or equal to -0.25 mm/mm over at least 5 mm. For variant "C", the variation V "culminates" at nearly -0.4 mm/mm; it is less than or equal to -0.25 mm/mm over about 12 mm, and less than or equal to -0.3 mm/mm over about 8 mm. Similarly, for variant "D" the variation V "culminates" at nearly -0.4 mm/mm; it is less than or equal to -0.25 mm/mm over 16 mm, and less than or equal to -0.3 mm/mm over about 12 mm.

A second way to characterize the preferred embodiments is to consider the aspect ratio Emax/DRL, Emax being the maximum width of the portion of rubber compound having an elastic modulus G' less than or equal to 15 MPa and a viscous modulus G" such that:

$$G" \text{ [MPa]} \le 0.2G' \text{ [MPa]} - 0.2 \text{ MPa,}$$

Emax being measured at right angles to the incoming portion of the carcass reinforcement, DRL being the radial height of the outer band. The rolling resistance is significantly reduced if the aspect ratio Emax/DRL is greater than or equal to 10%.

The values Emax and DRL are indicated for the tyres shown in Figures 7 and 8, for the case in which the bead filler 110 and the outer band 120 are made of rubber compound meeting the abovementioned condition. The tyre seen in Figure 7 (in other words variant "C") has an aspect ratio Emax/DRL of 13%, while the tyre in Figure 8 (variant "D") has an aspect ratio Emax/DRL of 15%. For comparison, variant "B" (Figure 6) has an aspect ratio of 7%.

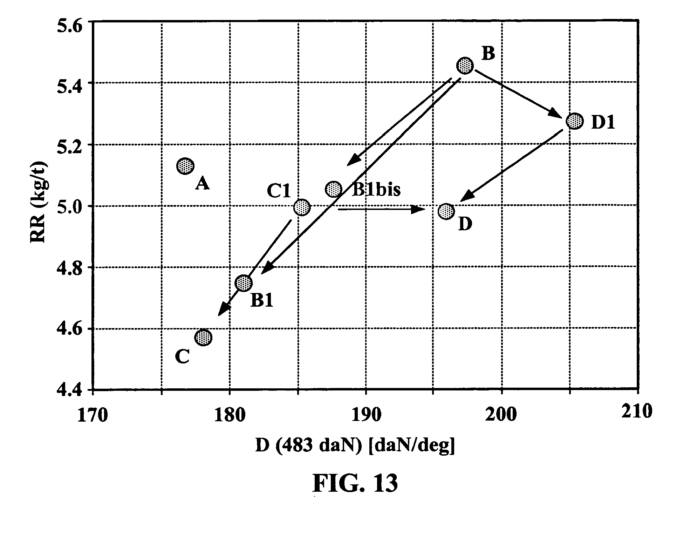

Figure 13 shows the rolling resistance RR (in kg per ton) of the four variants as a function of the cornering stiffness D of the tyre, at a load of 483 daN.

Table II summarizes the geometries of the variants tested and the chemical composition of the different portions.

Table II

| Variant | Architecture as shown in | Portion with G, G" according to the invention | Compound (Table 1) |
|---|---|---|---|
| A | Fig. 3 | none | 1 |
| B | | none | 1 |
| B1 | Fig. 6 | outer band and bead filler | 3 |
| B1 bis | | outer band and bead filler | 2 |
| C | Fig. 7 | outer band and bead filler | 3 |
| C1 | | none | 1 |
| D | Fig. 8 | outer band and bead filler | 2 |
| D1 | | none | 1 |

Take variant "A" as a reference. Adding an outer band (variant "B") increases the cornering stiffness of the tyre and its rolling resistance. When this outer band and the bead filler are made from a "rubber compound according to the invention" (that is, having an elastic modulus G' less than or equal to 15 MPa and a viscous modulus G" such that G" [MPa] ≤ 0.2G' [MPa] - 0.2 MPa), (variants "B1" and "B1 bis"), the result is a large reduction in rolling resistance and cornering stiffness. Simply changing the geometry of the outer band (switching from variant "B" to variant "C1") gives a reduction comparable to that of variant "B1 bis" but slightly less than the reduction observed with variant "B1". If the rubber compound according to the invention is used in this modified geometry (variant "C"), the reduction of cornering stiffness and rolling resistance is very substantial.

When switching from the geometry of variant "B" to that of Figure 8, without modifying the type of rubber compound (variant "D1"), the cornering stiffness increases while the rolling resistance of the tyre is reduced. Going further, if a rubber compound according to the invention (variant "D") is used, a lower rolling resistance can be obtained with no significant change in the cornering stiffness.

**Claims**

1. Tyre comprising:

   two beads (20) designed to be in contact with a wheel rim (5), each bead comprising at least one annular reinforcing structure (70);
   two sidewalls (30) extending the beads radially toward the outside, the two sidewalls joining in
   a crown comprising a crown reinforcement (80, 90, 100) surmounted by a tread (40);
   at least one carcass reinforcement (60) extending from the beads through the sidewalls to the crown, the carcass reinforcement comprising a plurality of carcass reinforcing elements and being anchored in the two beads by a tum-up around the annular reinforcing structure in such a way as to form in each bead an incoming portion (61) and a wrapped-around portion (62), each wrapped-around portion extending radially toward the outside, to an end (63) located at a radial distance DRR from the radially innermost point (71) of the annular reinforcing structure of the bead, and the radial distance DRR being greater than or equal to 15% of the radial height H of the tyre;
   wherein each bead has a bead filler (110), the bead filler being located radially outside of the annular reinforcing structure and at least partly between the incoming portion and the wrapped-around portion of the carcass reinforcement, the bead filler extending radially outside of the radially innermost point (71) of the annular reinforcing structure of the bead as far as a radial distance DRB from said point, the radial distance DRB being greater than or equal to 20% of the radial height H of the tyre,

wherein each bead also comprises an outer band (120) placed axially outside of both the carcass reinforcement and the bead filler, each outer band extending radially toward the outside, from a radially inner end (121) located at a distance DRI from the radially innermost point (71) of the annular reinforcing structure of the bead, DRI being less than or equal to 20% of the radial height H of the tyre, as far as a radially outer end (122), and the radial distance DRL from the radially outer end (122) of the outer band to the radially inner end (121) of the outer band being greater than or equal to 25% of the radial height H of the tyre,

**characterized in that** the outer band (120) is made of a rubber compound having an elastic modulus G' less than or equal to 15 MPa and a viscous modulus G" such that:

$$G'' \text{ [MPa]} \le 0.2G' \text{ [MPa]} - 0.2 \text{ MPa,}$$

the elastic and viscous moduli being measured at 23°C.

2. Tyre according to Claim 1, wherein the bead filler (110) is made of a rubber compound having an elastic modulus G' less than or equal to 15 MPa and a viscous modulus G" such that:

$$G'' \text{ [MPa]} \le 0.2G' \text{ [MPa]} - 0.2 \text{ MPa,}$$

the elastic and viscous moduli being measured at 23°C.

3. Tyre according to one of the preceding claims, wherein, in any radial section, the portion of rubber compound having an elastic modulus G' less than or equal to 15 MPa and a viscous modulus G" such that:

$$G'' \text{ [MPa]} \le 0.2G' \text{ [MPa]} - 0.2 \text{ MPa,}$$

has a thickness E(r), this thickness corresponding to the length of the intersection of the direction (150) perpendicular to the incoming portion (61) of the carcass reinforcement (60) with said portion of rubber compound, r being the distance from the intersection of said direction perpendicular to the incoming portion of the carcass reinforcement with the carcass reinforcement to the radially innermost point (71) of the annular reinforcing structure (70), the thickness E(r) changes as a function of the distance r such that, in the range of distances r greater than or equal to 15 % and smaller than or equal to 50 % of the radial height H of the tyre, the variation of the thickness $\dfrac{\partial E(r)}{\partial r}$ is

less than or equal to -0.25 mm/mm over at least 5 mm.

4. Tyre according to one of the preceding claims, wherein the aspect ratio Emax/DRL, where Emax is the maximum width of the portion of rubber compound having an elastic modulus G' less than or equal to 15 MPa and a viscous modulus G" such that:

$$G'' \text{ [MPa]} \le 0.2G' \text{ [MPa]} - 0.2 \text{ MPa,}$$

Emax being measured at right angles to the incoming portion (61) of the carcass reinforcement and where DRL is the radial height of the outer band (120), is greater than or equal to 10%.

5. Tyre according to one of the preceding claims, wherein the bead filler (110) comprises:

a first part (111) of tapered radial section, this first part becoming progressively thinner radially toward the outside before turning into
a second part (112) with a radial section that has an approximately constant width, the second part being located radially outside of the first part (111) and turning into
a third part (113) with a radial section that tapers off, the third part being situated radially outside of the second part (112).

**Patentansprüche**

1. Reifen, der Folgendes umfasst:

   zwei Wulste (20), die konstruiert sind, um mit einer Felge (5) in Kontakt zu sein, wobei jeder Wulst wenigstens eine ringförmige Verstärkungsstruktur (70) umfasst;
   zwei Seitenwände (30), die die Wulste radial zur Außenseite hin verlängern, wobei sich die zwei Seitenwände miteinander verbinden in
   einer Lauffläche, die eine Laufflächenverstärkung (80, 90, 100) umfasst, über der sich ein Profil (40) angebracht ist;
   wenigstens eine Karkassenverstärkung (60), die sich von den Wulsten durch die Seitenwände zur Lauffläche erstreckt, wobei die Karkassenverstärkung mehrere Karkassenverstärkungselemente umfasst und in den zwei Wulsten durch einen Umschlag um die ringförmige Verstärkungsstruktur auf eine Weise verankert ist, dass in jedem Wulst ein eingehender Abschnitt (61) und ein umgreifender Abschnitt (62) gebildet ist, wobei sich jeder umgreifende Abschnitt radial zur Außenseite hin bis zu einem Ende (63) erstreckt, das sich in einem radialen Abstand DRR von dem radial am weitesten innen gelegenen Punkt (71) der ringförmigen Verstärkungsstruktur des Wulstes befindet, und der radiale Abstand DRR größer oder gleich 15 % der radialen Höhe H des Reifens ist;
   wobei jeder Wulst einen Kernreiter (110) aufweist, wobei sich der Kernreiter radial außerhalb der ringförmigen Verstärkungsstruktur und wenigstens teilweise zwischen dem eingehenden Abschnitt und dem umgreifenden Abschnitt der Karkassenverstärkung befindet, wobei sich der Kernreiter radial außerhalb des radial am weitesten innen gelegenen Punktes (71) der ringförmigen Verstärkungsstruktur des Wulstes so weit erstreckt wie ein radialer Abstand DRB von dem Punkt, wobei der radiale Abstand DRB größer oder gleich 20 % der radialen Höhe H des Reifens ist,
   wobei jeder Wulst auch ein äußeres Band (120) umfasst, das axial außerhalb sowohl der Karkassenverstärkung als auch des Kernreiters angeordnet ist, wobei sich jedes äußere Band von einem radialen inneren Ende (121), das sich in einem Abstand DRI vom radial am weitesten innen gelegenen Punkt (71) der ringförmigen Verstärkungsstruktur des Wulstes befindet, radial zur Außenseite hin bis zu einem radial äußeren Ende (122) erstreckt, wobei DRI kleiner oder gleich 20 % der radialen Höhe H des Reifens ist, und der radiale Abstand DRL von dem radial äußeren Ende (122) des äußeren Bandes zum radial inneren Ende (121) des äußeren Bandes größer oder gleich 25 % der radialen Höhe H des Reifens ist,
   **dadurch gekennzeichnet, dass** das äußere Band (120) aus einer Gummimischung hergestellt ist, die einen Elastizitätsmodul G', der kleiner oder gleich 15 MPa ist, und einen Viskositätsmodul G", für den gilt

$$G'' \text{ [MPa]} \leq 0{,}2 \; G' \text{ [MPa]} - 0{,}2 \text{ MPa,}$$

   aufweist, wobei der Elastizitäts- und der Viskositätsmodul bei 23 °C gemessen werden.

2. Reifen nach Anspruch 1, wobei der Kernreiter (110) aus einer Gummimischung hergestellt ist, die einen Elastizitätsmodul G', der kleiner oder gleich 15 MPa ist, und einen Viskositätsmodul G", für den gilt

$$G'' \text{ [MPa]} \leq 0{,}2 \; G' \text{ [MPa]} - 0{,}2 \text{ MPa,}$$

   aufweist, wobei der Elastizitäts- und der Viskositätsmodul bei 23 °C gemessen werden.

3. Reifen nach einem der vorhergehenden Ansprüche, wobei in jedem radialen Teilstück der Abschnitt der Gummimischung, die einen Elastizitätsmodul G', der kleiner oder gleich 15 MPa ist, und einen Viskositätsmodul G", für den gilt:

$$G'' \text{ [MPa]} \leq 0{,}2 \; G' \text{ [MPa]} - 0{,}2 \text{ MPa,}$$

   aufweist, eine Dicke E(r) aufweist, wobei diese Dicke der Länge der Überschneidung der Richtung (150) senkrecht zum eingehenden Abschnitt (61) der Karkassenverstärkung (60) mit dem Anteil der Gummimischung entspricht, r der Abstand von der Überschneidung der Richtung senkrecht zu dem eingehenden Abschnitt der Karkassenverstärkung mit der Karkassenverstärkung zum radial am weitesten innen gelegenen Punkt (71) der ringförmigen Verstärkungsstruktur (70) ist, wobei sich die Dicke E(r) als eine Funktion des Abstandes r ändert, so dass in dem Bereich von Abständen r größer oder gleich 15 % und kleiner oder gleich 50 % der radialen Höhe H des Reifens die Variation der Dicke $\partial E\ (r)\ \partial r$ über wenigstens 5 mm kleiner oder gleich -0,25 mm/mm ist.

4. Reifen nach einem der vorhergehenden Ansprüche, wobei das Seitenverhältnis Emax/DRL, in dem Emax die maximale Breite des Abschnitts der Gummimischung ist, die einen Elastizitätsmodul G', der kleiner oder gleich 15 MPa ist, und einen Viskositätsmodul G", für den gilt:

$$G" \ [MPa] \ \leq \ 0,2 \ G' \ [MPa] \ - \ 0,2 \ MPa,$$

aufweist, Emax im rechten Winkel zum eingehenden Abschnitt (61) der Karkassenverstärkung gemessen wird, und in dem DRL die radiale Höhe des äußeren Bandes (120) ist, größer oder gleich 10 % ist.

5. Reifen nach einem der vorhergehenden Ansprüche, wobei der Kernreiter (110) Folgendes umfasst:

einen ersten Abschnitt (111) mit einem sich verjüngenden radialen Teilstück, wobei dieser erste Abschnitt radial in Richtung zur Außenseite hin zunehmend dünner wird, ehe er übergeht in einen
zweiten Abschnitt (112) mit einem radialen Teilstück, das eine annähernd konstante Breite aufweist, wobei sich der zweite Abschnitt radial außerhalb des ersten Abschnitts (111) befindet und übergeht in einen
dritten Abschnitt (113) mit einem radialen Teilstück, das ausläuft, wobei der dritte Abschnitt radial außerhalb des zweiten Abschnitts (112) gelegen ist.

**Revendications**

1. Pneumatique comportant :

- deux bourrelets (20) destinés à entrer en contact avec une jante de montage (5), chaque bourrelet comportant au moins une structure annulaire de renforcement (70) ;
- deux flancs (30) prolongeant les bourrelets radialement vers l'extérieur, les deux flancs s'unissant dans
- un sommet comprenant une armature de sommet (80, 90, 100), surmontée d'une bande de roulement (40) ;
- au moins une armature de carcasse (60) s'étendant depuis les bourrelets à travers les flancs jusqu'au sommet, l'armature de carcasse comportant une pluralité d'éléments de renforcement de carcasse et étant ancrée dans les deux bourrelets par un retournement autour de la structure annulaire de renforcement, de manière à former dans chaque bourrelet un brin aller (61) et un brin retour (62), chaque brin retour s'étendant radialement à l'extérieur jusqu'à une extrémité (63) située à une distance radiale DRR du point (71) radialement le plus à l'intérieur de la structure annulaire de renforcement du bourrelet, la distance radiale DRR étant supérieure ou égale à 15 % de la hauteur radiale H du pneumatique ;
- dans lequel chaque bourrelet comporte un bourrage (110), le bourrage étant situé radialement à l'extérieur de la structure annulaire de renforcement et au moins partiellement entre le brin aller et le brin retour de l'armature de carcasse, le bourrage s'étendant radialement à l'extérieur du point (71) radialement le plus à l'intérieur de la structure annulaire de renforcement du bourrelet jusqu'à une distance radiale DRB dudit point, la distance radiale DRB étant supérieure ou égale à 20 % de la hauteur radiale H du pneumatique,

dans lequel chaque bourrelet comporte en outre une bande extérieure (120) placée axialement à l'extérieur de l'armature de carcasse et du bourrage, chaque bande extérieure s'étendant radialement à l'extérieur d'une extrémité (121) radialement intérieure située à une distance DRI du point (71) radialement le plus à l'intérieur de la structure annulaire de renforcement du bourrelet, DRI étant inférieure ou égale à 20 % de la hauteur radiale H du pneumatique, jusqu'à une extrémité (122) radialement extérieure, la distance radiale DRL entre l'extrémité (122) radialement extérieure de la bande extérieure et l'extrémité (121) radialement intérieure de la bande extérieure étant supérieure ou égale à 25 % de la hauteur radiale H du pneumatique, **caractérisé en ce que** la bande extérieure (120) est réalisée dans un mélange caoutchouteux ayant un module élastique G' inférieur ou égal à 15 MPa et un module visqueux G" tel que :

$$G'' \ [MPa] \leq 0.2 \cdot G' \ [MPa] - 0.2 \ MPa,$$

les modules élastiques et visqueux étant mesurés à 23° C.

2. Pneumatique selon la revendication 1, dans lequel le bourrage (110) et la bande extérieure (120) sont réalisés dans un mélange caoutchouteux ayant un module élastique G' inférieur ou égal à 15 MPa et un module visqueux G" tel que :

$$G'' \, [MPa] \leq 0.2 \cdot G' \, [MPa] - 0.2 \, MPa,$$

les modules élastiques et visqueux étant mesurés à 23° C.

3. Pneumatique selon l'une des revendications précédentes, dans lequel, dans toute section radiale, la portion de mélange caoutchouteux ayant un module élastique G' inférieur ou égal à 15 MPa et un module visqueux G" tel que :

$$G'' \, [MPa] \leq 0.2 \cdot G' \, [MPa] - 0.2 \, MPa,$$

a une épaisseur E(r), cette épaisseur correspondant à la longueur de l'intersection de la direction (150) perpendiculaire au brin aller (61) de l'armature de carcasse (60) avec ladite portion de mélange caoutchouteux, r désignant la distance séparant l'intersection de ladite direction perpendiculaire au brin aller de l'armature de carcasse avec l'armature de carcasse du point (71) radialement le plus à l'intérieur de la structure annulaire de renforcement (70), l'épaisseur E(r) varie en fonction de la distance r de manière à ce que, dans le domaine des distances r supérieures ou égale à 15% et inférieures ou égales à 50% de la hauteur radiale H du pneumatique, la variation de l'épaisseur

$\dfrac{\partial E(r)}{\partial r}$ est inférieure ou égale à - 0.25 mm/mm sur au moins 5 mm.

4. Pneumatique selon l'une des revendications précédentes, dans lequel le rapport d'aspect Emax/DRL, Emax étant la largeur maximale de la portion de mélange caoutchouteux ayant un module élastique G' inférieur ou égal à 15 MPa et un module visqueux G" tel que :

$$G'' \, [MPa] \leq 0.2 \cdot G' \, [MPa] - 0.2 \, MPa,$$

Emax étant mesurée perpendiculairement au brin aller (61) de l'armature de carcasse, DRL étant la hauteur radiale de la bande extérieure (120), est supérieur ou égal à 10 %.

5. Pneumatique selon l'une des revendications précédentes, dans lequel le bourrage (110) comporte :

- une première partie (111) ayant une section radiale conique, cette première partie se rétrécissant radialement vers l'extérieur et débouchant sur
- une deuxième partie (112) ayant une section radiale à largeur substantiellement constante, la deuxième partie étant située radialement à l'extérieur de la première partie (111) et débouchant sur
- une troisième partie (113) à section radiale effilée, la troisième partie étant située radialement à l'extérieur de la deuxième partie (112).

40

10

30

20

**FIG. 1**
**(PRIOR ART)**

10

40

101

100

91

90

81

80

60

61

30

50

20

70

**FIG. 2**
**(PRIOR ART)**

EP 2 379 355 B1

10

40

25

130

80 90

30

41

H

70

10

5

60

50

DRB

63

DRR

62 20

61

110

70 71

**FIG. 3
(PRIOR ART)**

**FIG. 4**

110

113

LA

112

111

**FIG. 5**

**FIG. 6**

**FIG. 7**

**FIG. 8**

**FIG. 9**

**FIG. 10**

**FIG. 11**

**FIG. 12**

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5526863 A

- EP 0947358 A